# EUROPEAN PATENT SPECIFICATION

(11) **EP 3 569 908 B1**
(45) Date of publication and mention of the grant of the patent: **26.04.2023**
(21) Application number: 18425036.3
(22) Date of filing: 15.05.2018
(51) Int. Cl.: F16L 15/08, F16L 29/02, F16L 29/04, E04G 23/08

(54) **WATER AND DUST-TIGHT QUICK COUPLING**
WASSER- UND STAUBDICHTE SCHNELLKUPPLUNG
ACCOUPLEMENT RAPIDE ETANCHE A L'EAU ET A LA POUSSIERE

(43) Date of publication of application: 20.11.2019
(73) Proprietor: Faster S.R.L., 26027 Rivolta d'Adda (IT)
(72) Inventor: Rossetti, Daniele, 26027 Rivolta d'Adda (CR) (IT); Polgati, Igor, 26027 Rivolta d'Adda (CR) (IT)
(74) Representative: Lualdi, Lorenzo

(56) References cited:
- EP-A1- 3 228 915
- CN-U- 206 001 157
- US-A- 4 582 347
- US-A1- 2005 199 297

## Description

### FIELD OF THE INVENTION

The present invention relates to a quick coupling for pressurised fluids, in particular a flat face screw coupling of the type used in the construction field and machinery for heavy jobs, such as the demolition of buildings or the like, specifically designed and tested to be water and dust tight.

### BACKGROUND

The quick coupling for pressurised fluids of the type considered comprises at least two bodies: a first female half coupling within which a male half coupling is inserted and locked by means of a screw coupling provided with a safety ring nut.

Inside the coupling, the hydraulic line is axially defined which in turn comprises within itself a plurality of components necessary for the operation and fluid dynamics of the coupling.

A condition that could potentially cause breakages or however malfunctioning of the flat face screw couplings of the type considered herein is their use in dirty environments, such as quarries or sites, particularly sites for the demolition of buildings, where there is a strong presence of sand, mud and water.

It has been noted that in particularly critical environmental conditions, external elements such as water and dust can, in couplings of the known type, surpass the external part of the coupling itself, in particular the female part of the coupling as will be better explained below, hence causing the accumulation of dirt inside the coupling and causing malfunctioning such as the internal components not sliding any more and/or the locking of the integrated ball bearing.

Furthermore, the penetration of dirt inside the coupling can damage the sealing elements currently present, such as the front O-ring in the male/female connection area, the metal elastic ring between the main body and the ring nut indicated with reference number 2, and/or the shaped gaskets.

Damage to the sealing elements can cause oil leaks.

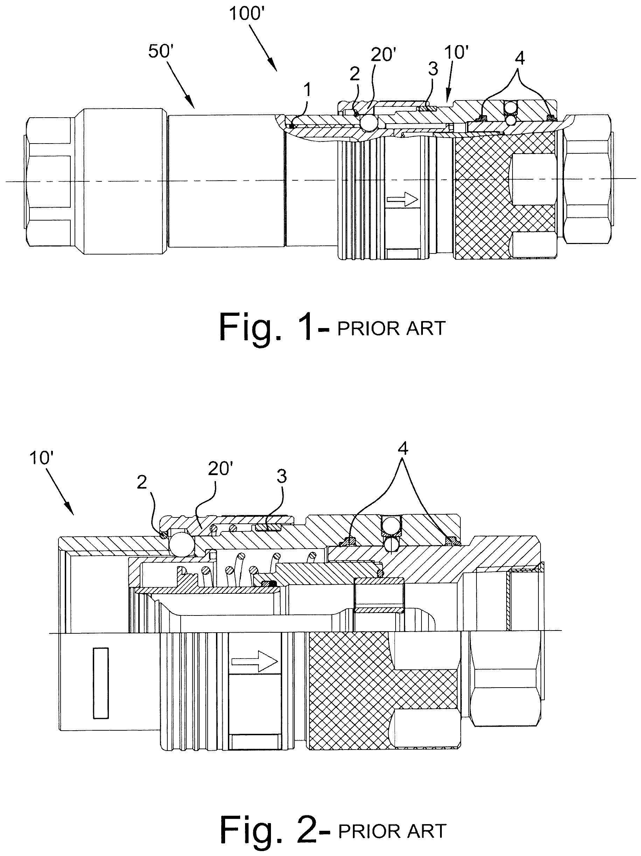

A known coupling of the type here considered is shown in figures 1 and 2. More in particular, figure 1 shows the male half coupling and the female half coupling coupled, while figure 2 only shows the female half coupling. Such quick couplings of the known type have many potential points for the inlet of dirt which, in extreme uses, make them subject to breakages or malfunctioning.

More specifically, with reference to figure 1 the critical points with respect to the inlet of dirt and water in a flat face screw coupling of the type considered here are as follows:
- the connection zone between male and female in which the seal is guaranteed by an O-Ring **1,** which however provides a good barrier against the inlet of dirt;
- the stroke end abutment zone of the automatic safety ring nut **20;** the ring nut **20** rests on a metal elastic ring **2** that naturally has an open portion to allow its insertion; the metal-metal rest does not guarantee a seal against dirt and dust and furthermore the open zone is a particularly critical point for the seal;
- the rear zone of the ring nut **20** in which a band **3** is provided, coloured green in couplings of this type made by the Applicant to visually mark the successful connection; the green band in couplings of the known type is made of thermoplastic elastomer, in particular thermoplastic polyurethane-TPU; the main aim of this component in couplings of the known type is mainly that of visually marking the successful connection as it is configured with a substantially rectangular transverse profile with flat surfaces so that the interference with the ring nut **20** is practically null so as not to lock the sliding of the ring nut itself; this configuration of the band **3** does not therefore guarantee a seal against water and dust;
- another critical zone for the seal against water and dust is the zone of the rear way wipers **4;** these elements are particularly critical for the seal as to perform the wiping function they are generally made of nitrile rubber (NBR), which at the temperatures of around 100°C that are easily reached during normal operation of the couplings in question, softens. Both for this reason and because of the not always precise tolerances caused by the use of a "soft" material combined with a small cross section with respect to the internal diameter thereof, this component does not guarantee the seal and sometimes does not even perform the wiping function properly and must be replaced.

An example of known coupling is disclosed by US 2005/199297 A1, which concerns a breakaway coupling suitable for being positioned between a liquid anhydrous-ammonia nurse tank and an applicator for applying the liquid anhydrous ammonia to the field.

Upon separation, each coupling half is automatically sealed for retaining the liquid anhydrous ammonia in the flow lines extending to and from the coupling.

### SUMMARY OF THE INVENTION

In light of the above, the task of the present invention is that of solving the drawbacks affecting quick couplings of the type here considered, in particular by providing a flat face quick coupling that is both water and dust tight.

Within such task, it is an object of the present invention to provide a flat face quick coupling that avoids or at least significantly reduces the malfunctioning caused by use in dusty work environments, such as in the case of earth moving machinery, cranes for demolishing buildings, installations on oil and gas platforms, and so on.

A further object of the present invention is that of providing a flat face coupling able to pass the laboratory tests especially designed for the issue of the IP, International Protection Marking, that ensures that the coupling is designed and tested to be water and dust tight, which guarantees operation in critical environments.

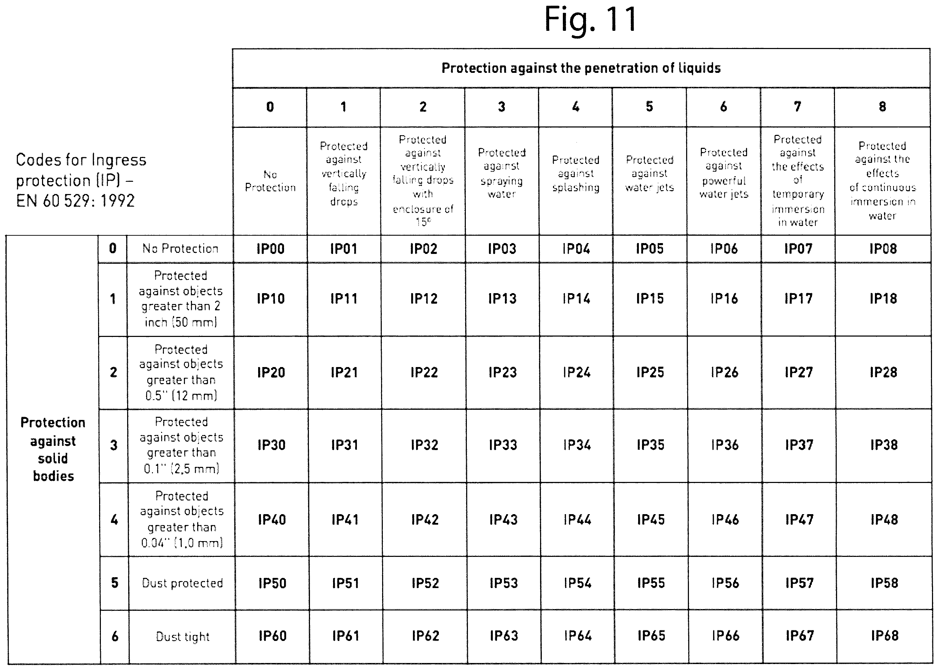

More in particular, the IP standards classify and assess the degree of protection provided by mechanical devices (casings) and electrical panels against the intrusion of solid particles (such as dust) and the access of liquids. The code is the acronym IP followed by two figures: the first figure indicates the protection level that the casing provides against the access of foreign solid objects, while the second figure indicates the protection against the access of liquids according to the table shown in figure 11.

A further object of the present invention is that of providing a flat face coupling that is water and dust tight and that at the same time maintains the same mechanical, fluid dynamic and ease of use characteristics that constitute the main functionalities of couplings of the known type currently commercialised by the same Applicant.

Further, another object of the present invention is that of providing a coupling equipped with gaskets specifically designed to obtain the perfect seal against water and dust, therefore the subject matter of the present invention is also the profile and materials chosen for such gaskets.

The task set out above, as well as the mentioned objects and others that will appear more clearly below, are reached by a flat face quick coupling according to the enclosed claim 1.

Other characteristics of the coupling according to the invention are provided in the dependent claims, which also form an integral part of the present description.

### LIST OF FIGURES

Additional features and advantages will become clearer from the description of a preferred, but non-exclusive embodiment of the sealed flat face quick coupling according to the present invention, illustrated by way of non-limiting example with the aid of the appended drawings, in which:
figure 1 shows a coupling of the type known in the state of the art by the same applicant;
figure 2 shows a female half coupling of the type known in the state of the art in a disconnected condition; figure 3 illustrates an overall, partial sectional view of the sealed quick coupling according to the present invention;
figure 4 illustrates a partial sectional view of the female half coupling according to the present invention;
figure 5 shows a perspective view of the first gasket that equips the coupling according to the present invention;
figure 6 shows a front partial sectional view of the gasket of figure 5;
figure 6A shows an enlargement of the profile of the gasket of figure 6;
figure 7 shows a perspective view of the second gasket that equips the coupling according to the present invention;
figure 8 shows a front partial sectional view of the gasket of figure 7;
figure 8A shows an enlargement of the profile of the gasket of figure 8;

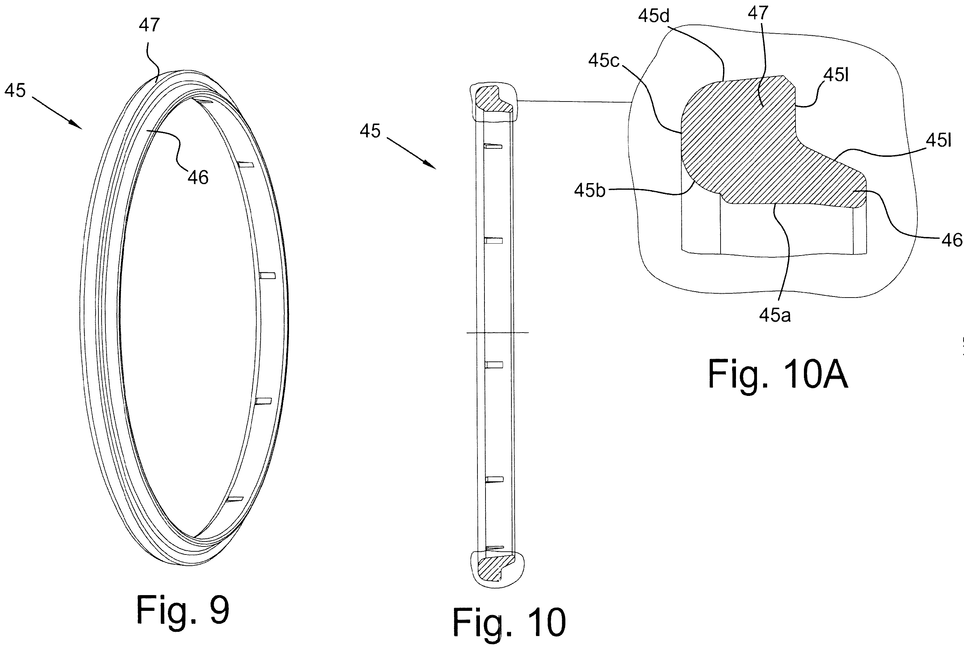

figure 9 shows a perspective view of the third gasket that equips the coupling according to the present invention;
figure 10 shows a front partial sectional view of the gasket of figure 9;
figure 10A shows an enlargement of the profile of the gasket of figure 10;
figure 11 illustrates a table related to the meaning of the IP xx codes;
figure 12 illustrates an example of a demolition machine on which the couplings according to the present invention are installed.

### DETAILED DESCRIPTION OF THE INVENTION

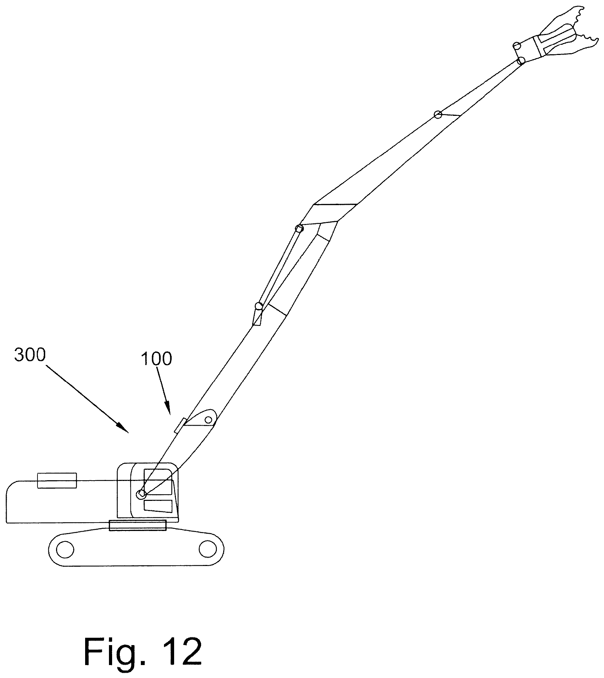

With particular reference to figures 1 and 2, quick couplings **100'** for pressurised fluids are known in the state of the art, in particular flat face screw couplings of the type used in the sector of construction and machinery for heavy jobs, comprising a male half coupling **50'** and a female half coupling **10'.** An example of a demolition machine **300** on which a plurality of quick couplings **100** according to the present invention is used can be seen in figure 12.

As is known, machines of this type envisage the disassembly of the articulated arms not only for the machine transport requirements but also during use. In fact, by way of example, it is considered that when they are used for demolishing a multi-storey building these machines use longer arms, even tens of metres long, for demolishing the higher storeys of the building, which are then replaced with shorter arms as the demolition operations proceed.

This is both for size reasons, as to demolish the lower storeys of the building if the machine maintained a very long arm it would have to be positioned very far from the building, and for stability reasons of the machine itself, which with a very long arm would tend to overturn very easily.

Demolition machines of this type therefore work in very dusty environments, and the couplings that equip them are exposed to dust and rainwater, as well as strong jets of water during the washing operations of the machine itself.

Such couplings of the known type have some critical points with respect to the inlet of dirt and water. They are in particular indicated in the figures with the reference numbers 1 to 4.

They comprise in particular the following zones.

The male and female connection zone in which the seal is guaranteed by an O-Ring **1.**

The O-ring **1** guarantees a good barrier against the inlet of dirt and water, and is therefore an element that successfully satisfies the sealing requirement. Another critical zone with respect to the inlet of water and dust is the stroke end abutment zone of the automatic safety ring nut **20'.**

The ring nut **20'** rests on a metal elastic ring **2** that has an open section for allowing its insertion. However, both the metal-metal support that does not guarantee the seal against dirt and dust, and the presence of said open section are particularly critical aspects for the seal.

Another critical point for the potential inlet of water and dust is represented by the rear zone of the ring nut **20'** in which a band **3** is provided, coloured green in couplings of this type made by the Applicant to visually mark the successful connection.

The main aim of this component in couplings of the known type is that of visually marking the successful connection as it is configured with a substantially rectangular transverse profile with flat surfaces so that the interference with the ring nut **20'** is practically null, so as not to lock the sliding of the ring nut itself.

This configuration of the band **3** does not therefore guarantee that it is water and dust tight.

The rear zone of the coupling in which the way wipers **4** are provided is another critical zone with respect to the inlet of water and dust, for the reasons already indicated above.

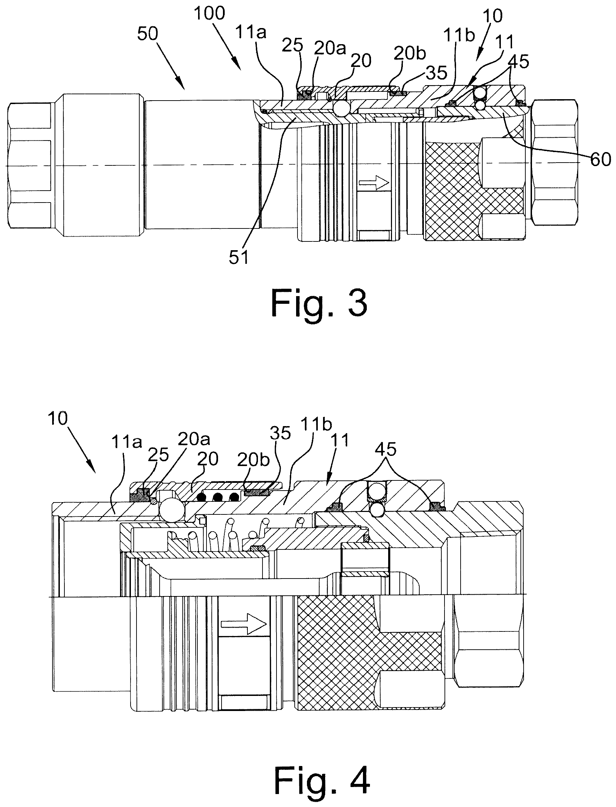

With respect to couplings **100'** of the known type, the coupling **100** illustrated in figures 3 and 4 adopts a series of technical solutions able to solve the sealing problems highlighted by couplings of the known type with particular reference to the critical zones identified.

More specifically, the flat face quick coupling **100** according to the present invention is of the screw type, i.e. comprising a female half coupling **10** to which a male half coupling **50** is connected by means of a threaded connection.

The female half coupling **10** in turn comprises a main body **11** and an adaptor body **60** coupled to said main body **11** for the connection of a hydraulic line.

The main body **11** comprises in turn a front portion **11a** and a rear portion **11b**. The front portion **11a** is configured to house a corresponding front portion **51** of a male half coupling **50** in turn connectible to a hydraulic line.

The main body **11** further comprises a safety ring nut **20** slidably associated externally with said main body **11** and movable between a first operating position that allows the connection/disconnection of the male half coupling **50** with/from the female half coupling **40,** and a second operating position in which the connection/disconnection operations are prevented. According to a preferred embodiment of the present invention, the coupling **100** further comprises a first sealing gasket **25** interposed between said ring nut **20** and said front portion **11a** of said main body **11.**

In order to house said first sealing gasket **25,** the ring nut **20** has been equipped with a designed housing seat **20a** in the anterior zone of the ring nut.

The terms anterior or front and rear are clear with reference to the coupling **100** of figure 3 and the female half coupling **10** of figure 4. The anterior zone of the female half coupling **10** is in particular the one towards the male half coupling **50** and the rear zone is the one towards the adaptor zone **60.**

The coupling **100** according to the present invention is also characterised in that said front section **11a** of said main body **11** extends into the front zone of the female half coupling **10** for a greater length than the maximum stroke of the safety ring nut **20** so that the seal of the first gasket **25** with the surface of the main body **11** is always guaranteed.

The coupling **100** according to the present invention further comprises a second sealing gasket **35** interposed between said ring nut **20** and said rear portion **11b** of the main body **11.**

More specifically, the first gasket **25** is advantageously toroidal, and has on a radial transverse plane a profile comprising a first substantially flat side **26** that faces towards the inside of the toroid to allow said main body **11** to rest on said front portion **11a** when the gasket is installed in the coupling, and a second side **29** that faces towards the outside of the toroid and that has a first section **29a** and a second section **29b** that extend upwards from a connecting section **29c** interposed between them. Said first **29a** and second **29b** section are configured to be inserted inside a designed counter-shaped seat **20a** obtained on said ring nut **20.**

The counter-shaped seat **20a** obtained on said ring nut **20** and the first gasket **25** inserted therein are configured so that said first section **29a** of said first gasket **25** is, once the gasket is assembled, facing towards the front part of the female half coupling **10** and ensures the seal against water and dust, and said second section **29b** is completely inserted within said seat **20a** and ensures the transverse stability of said second gasket **25** also in the case of translation movements of said ring nut **20** along the main body **11.**

Advantageously, the transverse profile of the first gasket **25** comprises an inclined section **29d** with respect to the orthogonal direction to the connecting section **29c** that defines an undercut that ensures the stability of said second gasket **25** with respect to the extrusion thereof from said seat of said ring nut **20.** The profile thus conceived of the first gasket **25,** in combination with the profile of the counter-shaped seat **20a** obtained on the safety ring nut **20** and intended to house said first gasket **25,** were the subject of a particularly detailed and complex study not only in terms of the aspects related to the water and dust tightness of the gasket, but also in relation to the assembly requirements of the gasket **25** itself, which must be inserted manually by the assembly operator within the seat **20a** obtained on the ring nut **20** when the latter is already assembled on the main body **11** of the female half coupling **10.**

Access to such seat **20a** takes place exclusively from the front with the coupling assembled, and therefore particular care was taken in the design of a profile of the first gasket **25** that at the same time guarantees the water and dust tightness of the anterior ring nut-main body **11** interface and that also allows the translation of the ring nut with respect to the main body in the connection and disconnection operations of the coupling and allows easy installation by the operator during assembly without the need to use any particular tools.

In fact, the first gasket **25** must be mounted when the ring nut **20** is already assembled on the main body **11** of the half coupling **10.**

According to the preferred embodiment of the coupling 100 according to the present invention, it further comprises a second sealing gasket **35** also having a toroidal shape and having, on a radial plane, a transverse profile comprising a first side **35a** that faces towards the inside of the toroid having a substantially flat development in order to guarantee that, once the gasket is assembled, the main body **11** rests on the rear portion **11b,** and a second side **35b,** which faces towards the outside of the toroid, having two contact shoulders **35b'** which extend upwards, i.e. towards the outside of the toroid, starting from a central connecting section **35c** and that, during use, guarantee contact with the internal surface **20b** of the ring nut **20.**

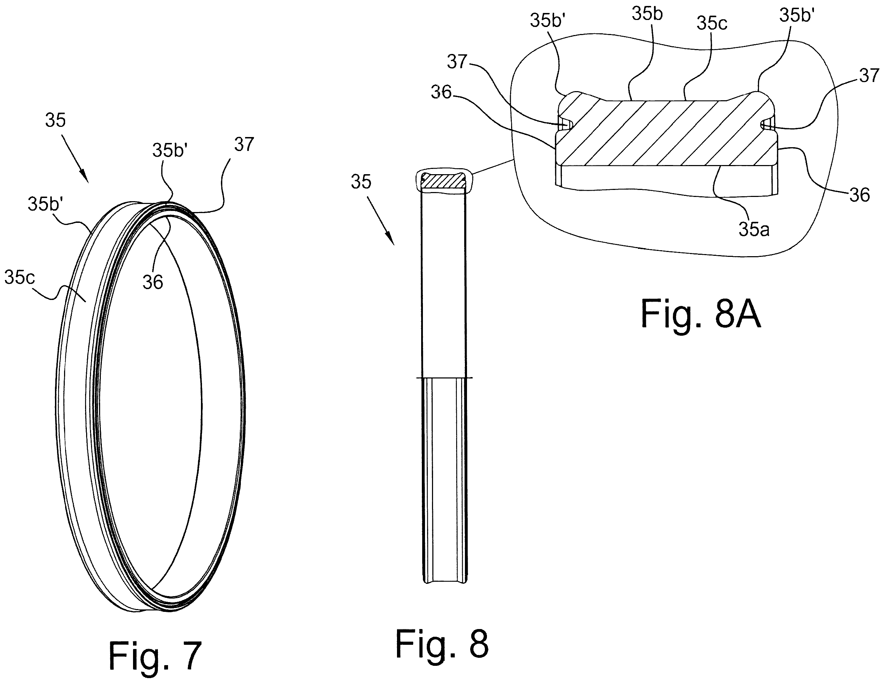

Advantageously, the seal of the two contact shoulders **35b'** against the internal surface **20b** of the ring nut **20** is guaranteed by their elastic behaviour, improved by the presence of loops **37** obtained on lateral sections **36** of the transverse profile of the gasket **35,** according to what can be seen, in particular, in figures 7, 8 and 8A.

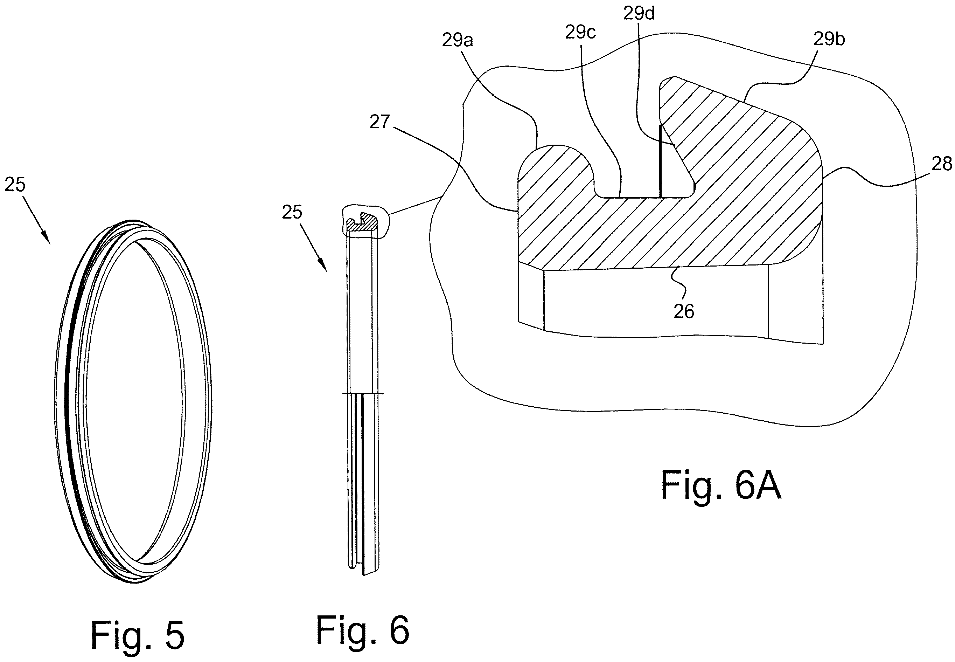

With particular reference to the overall perspective view of figure 5, the loops **37** have a circumferential development that affects the whole lateral surface **36** of the second gasket **35,** just as the contact shoulders **35b'** develop along the entire circumference of the toroid, the second gasket **35** is symmetrical with respect to a radial halfway plane.

Thanks to the presence of the two contact shoulders **35b',** the perfect water and dust tightness of the second gasket **35** against the internal surface **20b** of the ring nut **20** is guaranteed both when the ring nut **20** is in the position shown in figure 3, corresponding to a correctly connected coupling condition, and when the ring nut **20** is in the position shown in figure 4, corresponding to a disconnected coupling condition. According to a preferred aspect of the present invention, both the first sealing gasket **25** and the second sealing gasket **35** are made of thermoplastic polyurethane, also only identified by the acronym TPU. Advantageously, the second sealing gasket **35** is coloured, preferably in green, so as to act as a visual reference for the successful connection condition. In fact, as can be noted with particular reference to figure 4, when the coupling is disconnected the ring nut **20** of the female half coupling **10** completely covers the second gasket **35,** which is therefore not visible. When instead the coupling is correctly connected, as shown in figure 3, the ring nut **20** is in the advanced position and the second gasket **35** can be seen by the operator. Colouring the second gasket **35** in green therefore allows the operator to have visual confirmation of the successful coupling.

According to the preferred embodiment of the present invention illustrated here by way of non-limiting example, the coupling **100** advantageously comprises still on said female half coupling **10** at least a third gasket **45** housed inside a designated seat obtained in the main body **11** and interposed between said main body **11** and the adaptor body **60.**

The third gasket **45** also performs a way wiping function, but thanks to its particular profile which will be described more clearly below and the fact that it is made of a more resistant material to temperatures over 100°C, it ensures the water and dust tightness of the interface between the main body **11** and the adaptor body **60,** which as has been mentioned is another critical point for the seal.

Advantageously, a pair of third gaskets **45** is provided, each having a toroidal shape with a profile, on a radial transverse plane, comprising a main body **47** from which a stalk **46** branches off, which is in fact appointed to perform the sealing and way wiping function on the adaptor body **60.**

The profile of the third gasket **45** advantageously has a first section **45a** which faces towards the inside of the toroid connected to a curved connecting section **45b** which connects said first section **45a** to a substantially vertical lateral section **45c** which is in turn connected to a second substantially horizontal section **45d** that faces towards the outside of the toroid and that is connected to a substantially vertical shoulder section **45e** parallel to said lateral section **45c.**

The shoulder section **45e** is connected in turn to an end section **45f** which delimits the stalk **46** from above, which is therefore delimited by the first section **45a** and by the end section **45f.**

Advantageously, the third gaskets **45,** of which there are two, are both housed in the main body **11** so that the stalk **46** of each gasket is facing the opposite direction with respect to each other.

As mentioned, it is a very important aspect for the water and dust tightness in every operating condition of the coupling for the third gaskets **45** to be made of a material that has the necessary mechanical properties to ensure that the gaskets **45** can act both as a seal and as a way wiper, and the capacity to maintain such mechanical properties also at temperatures over 100°C, temperatures that threaten the nitrile rubber (NBR) of which way wipers are usually made.

To obtain such result, the third gaskets **45** are made of thermoplastic polyurethane TPU.

The water and dust tightness of the coupling **100** according to the present invention was tested following strict laboratory tests envisaged by standards IEC 60529:2013 and EN 60529:1991+A1:200+A2:2013.

The quick coupling according to the present invention was therefore subjected to the tests envisaged by legislation in force, and passed the test corresponding to the code IP54, corresponding to a degree of protection against dust such as not to interfere with the operation of the device, and a degree of protection against water spray from any direction that does not interfere with the operation of the device.

Thus it has been shown how the gasket according to the present invention allows the task to be fulfilled and the objects that the invention set itself to be achieved.

The present invention has been described for non-limiting illustrative purposes, according to a preferred embodiment, but it is to be considered that any variations and/or modifications may be made by a person skilled in the art without departing from the relative scope of protection, as defined in the appended claims.

## Claims

1. Flat face screw quick coupling (100) comprising a female half coupling (10) which in turn comprises a main body (11) and an adaptor body (60) coupled to said main body (11) for the connection of a hydraulic line, said main body (11) comprising in turn a front portion (11a) and a rear portion (11b), said front portion (11a) being configured to house the front portion (51) of a male half coupling (50) in turn connectible to a hydraulic line, said main body (11) further comprising a safety ring nut (20) slidably associated externally with said main body (11) and movable between a first operating position that allows the connection/disconnection of the male half coupling (50) with/from the female half coupling (10), and a second operating position in which the connection/disconnection operations are prevented, further comprising a first sealing gasket (25) interposed between said ring nut (20) and said front portion (11a) of said internal body (11) and a second sealing gasket (35) interposed between said ring nut (20) and said rear portion (11b) of said main body (11), **characterized in that** said front portion (11a) of said main body (11) extends frontally to the female half coupling (10) for a greater length than the maximum stroke of the safety ring nut (20), and **in that** said first gasket (25) has a toroidal shape and a transverse profile on a radial plane comprising a first side (26), which faces towards the inside of the toroid, substantially flat for said main body (11) to rest on said front portion (11a), and a second side (29), which faces towards the outside of the toroid, and having a first section (29a) and a second section (29b) that project upwards from a connecting section (29c) interposed between them, configured to be inserted within a designated counter-shaped seat (20a) obtained on said ring nut (20).

2. Quick coupling (100) according to the preceding claim, **characterised in that** said counter-shaped seat (20a) obtained on said ring nut (20) and said first gasket (25) are configured so that, once the gasket is assembled, said first section (29a) of said first gasket (25) is facing towards the front part of the female half coupling (10) and ensures water and dust tightness, and **in that** said second section (29b) is completely inserted within said seat (20a) and ensures the transverse stability of said second gasket (25) in the case of translation movements of said ring nut (20) .

3. Quick coupling (100) according to the preceding claim, **characterised in that** the transverse profile of said first gasket (25) comprises an inclined section (29d) with respect to the orthogonal direction to said connecting section (29c) that defines an undercut that ensures the stability of said second gasket (25) with respect to the extrusion thereof from said seat of said ring nut (20).

4. Quick coupling (100) according to one or more of the preceding claims, **characterised in that** said second sealing gasket (35) has a toroidal shape and a transverse profile on a radial plane comprising a first side (35a), which faces towards the inside of the toroid, substantially flat for said main body (11) to rest on said rear portion (11b), and a second side (35b), which faces towards the outside of the toroid, having two contact shoulders (35b') extending from a central connecting section (35c) towards the outside of the toroid for contact with the internal surface (20b) of said ring nut (20).

5. Quick coupling (100) according to the preceding claim, **characterised in that** the two lateral sections (36) of the transverse profile of said second gasket (35) each comprise a loop (37) that separates said contact shoulder (35b') from the lower portion of the transverse profile.

6. Quick coupling (100) according to the preceding claim, **characterised in that** said loops (37) develop circumferentially along the whole lateral surface (36) of said second gasket (35).

7. Quick coupling (100) according to one or more of the preceding claims, **characterised in that** said first gasket (25) is made of thermoplastic polyurethane TPU.

8. Quick coupling (100) according to one or more of the preceding claims, **characterised in that** said second gasket (35) is made of thermoplastic polyurethane TPU.

9. Quick coupling (100) according to one or more of the preceding claims, **characterised in that** it further comprises at least a third gasket (45) housed within a designated seat obtained in said main body (11) and interposed between said main body (11) and said adaptor body (60) and also having a way wiper function, said at least one third gasket (45) having a toroidal shape with a transverse profile on a radial plane comprising a main body (47) from which a stalk (46) branches off, said profile having a first section (45a) that faces towards the inside of the toroid and connected to a curved connecting section (45b) that connects said first section (45a) to a substantially vertical lateral section (45c) which is in turn connected to a second substantially horizontal section (45d) which faces towards the outside of the toroid and that is connected to a substantially vertical shoulder section (45e) parallel to said lateral section (45c) and that is connected to an end section (45f) that delimits at the top a stalk delimited by said first section (45a) and said end section (45f), said stalk (46) being configured for contact with said adaptor body (60).

10. Quick coupling (100) according to the preceding claim, **characterised in that** said third gasket (45) is made of thermoplastic polyurethane TPU.

11. Quick coupling (100) according to any one of claims 10 or 11, **characterised in that** it comprises two of said third gaskets (45) housed in said main body (11) so that the stalks (46) are facing opposite directions with respect to each other.

## Patentansprüche

1. Schnellschraubkupplung (100) mit flacher Stirnfläche, die eine weibliche Halbkupplung (10) umfasst, die ihrerseits einen Hauptkörper (11) und einen mit dem Hauptkörper (11) gekoppelten Adapterkörper (60) zum Anschluss einer Hydraulikleitung umfasst, wobei der Hauptkörper (11) seinerseits einen vorderen Abschnitt (11a) und einen hinteren Abschnitt (11b) umfasst, wobei der vordere Abschnitt (11a) so konfiguriert ist, dass er den vorderen Abschnitt (51) einer männlichen Halbkupplung (50) aufnimmt, die ihrerseits mit einer Hydraulikleitung verbunden werden kann, wobei der Hauptkörper (11) ferner eine Sicherheitsringmutter (20) umfasst, die gleitend außerhalb des Hauptkörpers (11) zugeordnet ist und zwischen einer ersten Betriebsposition, die das Verbinden/Trennen der männlichen Halbkupplung (50) mit/von der weiblichen Halbkupplung (10) ermöglicht, und einer zweiten Betriebsposition, in der die Verbindungs-/Trennvorgänge verhindert werden, beweglich ist, ferner umfassend eine erste Dichtung (25), die zwischen der Ringmutter (20) und dem vorderen Abschnitt (11a) des Innenkörpers (11) angeordnet ist, und eine zweite Dichtung (35), die zwischen der Ringmutter (20) und dem hinteren Abschnitt (11b) des Hauptkörpers (11) angeordnet ist, **dadurch gekennzeichnet, dass** der vordere Abschnitt (11a) des Hauptkörpers (11) sich frontal zur weiblichen Halbkupplung (10) über eine größere Länge als der maximale Hub der Sicherheitsringmutter (20) erstreckt, und dass die erste Dichtung (25) eine Torusform und ein Querprofil in einer Radialebene aufweist, das eine erste Seite (26), die der Innenseite des Torus zugewandt ist und im Wesentlichen flach ist, damit der Hauptkörper (11) auf dem vorderen Abschnitt (11a) aufliegt, und eine zweite Seite (29) umfasst, die der Außenseite des Torus zugewandt ist und einen ersten Abschnitt (29a) und einen zweiten Abschnitt (29b) aufweist, die von einem dazwischen angeordneten Verbindungsabschnitt (29c) nach oben vorstehen, der so konfiguriert ist, dass er in einen dazu bestimmten gegenförmigen Sitz (20a) eingesetzt werden kann, der an der Ringmutter (20) ausgebildet ist.

2. Schnellkupplung (100) nach dem vorstehenden Anspruch, **dadurch gekennzeichnet, dass** der auf der Ringmutter (20) ausgebildete gegenförmige Sitz (20a) und die erste Dichtung (25) so konfiguriert sind, dass nach der Montage der Dichtung der erste Abschnitt (29a) der ersten Dichtung (25) dem vorderen Teil der weiblichen Halbkupplung (10) zugewandt ist und die Wasser- und Staubdichtigkeit gewährleistet, und dass der zweite Abschnitt (29b) vollständig in den Sitz (20a) eingesetzt ist und die Querstabilität der zweiten Dichtung (25) bei Translationsbewegungen der Ringmutter (20) gewährleistet.

3. Schnellkupplung (100) nach dem vorstehenden Anspruch, **dadurch gekennzeichnet, dass** das Querprofil der ersten Dichtung (25) einen in Bezug auf die orthogonale Richtung zu dem Verbindungsabschnitt (29c) geneigten Abschnitt (29d) umfasst, der eine Hinterschneidung definiert, die die Stabilität der zweiten Dichtung (25) in Bezug auf ihre Extrusion aus dem Sitz der Ringmutter (20) gewährleistet.

4. Schnellkupplung (100) nach einem oder mehreren der vorstehenden Ansprüche, **dadurch gekennzeichnet, dass** die zweite Dichtung (35) eine Torusform und ein Querprofil in einer Radialebene aufweist, das eine erste Seite (35a), die der Innenseite des Torus zugewandt ist und im Wesentlichen flach ist, damit der Hauptkörper (11) auf dem hinteren Abschnitt (11b) aufliegt, und eine zweite Seite (35b) umfasst, die der Außenseite des Torus zugewandt ist und zwei Kontaktschultern (35b') aufweist, die sich von einem zentralen Verbindungsabschnitt (35c) zur Außenseite des Torus erstrecken, um die Innenfläche (20b) der Ringmutter (20) zu berühren.

5. Schnellkupplung (100) nach dem vorstehenden Anspruch, **dadurch gekennzeichnet, dass** die beiden seitlichen Abschnitte (36) des Querprofils der zweiten Dichtung (35) jeweils eine Schleife (37) umfassen, die die Kontaktschulter (35b') vom unteren Abschnitt des Querprofils trennt.

6. Schnellkupplung (100) nach dem vorstehenden Anspruch, **dadurch gekennzeichnet, dass** die Schleifen (37) sich in Umfangsrichtung entlang der gesamten seitlichen Fläche (36) der zweiten Dichtung (35) erstrecken.

7. Schnellkupplung (100) nach einem oder mehreren der vorstehenden Ansprüche, **dadurch gekennzeichnet, dass** die erste Dichtung (25) aus thermoplastischem Polyurethan (TPU) hergestellt ist.

8. Schnellkupplung (100) nach einem oder mehreren der vorstehenden Ansprüche, **dadurch gekennzeichnet, dass** zweite Dichtung (35) aus thermoplastischem Polyurethan (TPU) hergestellt ist.

9. Schnellkupplung (100) nach einem oder mehreren der vorstehenden Ansprüche, **dadurch gekennzeichnet, dass** sie ferner mindestens eine dritte Dichtung (45) umfasst, die in einem dazu bestimmten Sitz untergebracht ist, der in dem Hauptkörper (11) ausgebildet ist, und zwischen dem Hauptkörper (11) und dem Adapterkörper (60) angeordnet ist und auch eine Wegabstreiffunktion hat, wobei die mindestens eine dritte Dichtung (45) eine Torusform mit einem Querprofil in einer radialen Ebene aufweist, die einen Hauptkörper (47) umfasst, von dem ein Stiel (46) abzweigt, wobei das Profil einen ersten Abschnitt (45a) aufweist, der der Innenseite des Torus zugewandt ist und mit einem gekrümmten Verbindungsabschnitt (45b) verbunden ist, der den ersten Abschnitt (45a) mit einem im Wesentlichen vertikalen seitlichen Abschnitt (45c) verbindet, der seinerseits mit einem zweiten, im Wesentlichen horizontalen Abschnitt (45d) verbunden ist, der der Außenseite des Torus zugewandt ist und der mit einem im Wesentlichen vertikalen Schulterabschnitt (45e) parallel zu dem seitlichen Abschnitt (45c) verbunden ist und der mit einem Endabschnitt (45f) verbunden ist, der an der Spitze einen Stiel begrenzt, der durch den ersten Abschnitt (45a) und den Endabschnitt (45f) begrenzt wird, wobei der Stiel (46) für den Kontakt mit dem Adapterkörper (60) konfiguriert ist.

10. Schnellkupplung (100) nach dem vorstehenden Anspruch, **dadurch gekennzeichnet, dass** die dritte Dichtung (45) aus thermoplastischem Polyurethan (TPU) hergestellt ist.

11. Schnellkupplung (100) nach einem der Ansprüche 10 oder 11, **dadurch gekennzeichnet, dass** sie zwei der dritten Dichtungen (45) umfasst, die in dem Hauptkörper (11) untergebracht sind, so dass die Stiele (46) einander entgegengesetzten Richtungen zugewandt sind.

## Revendications

1. Raccord rapide à vis à face plate (100) comprenant un demi-raccord femelle (10) qui comprend à son tour un corps principal (11) et un corps adaptateur (60) couplé audit corps principal (11) pour le raccordement d'une ligne hydraulique, ledit corps principal (11) comprenant à son tour une partie avant (11a) et une partie arrière (11b), ladite partie avant (11a) étant configurée pour loger la partie avant (51) d'un demi-raccord mâle (50) pouvant à son tour être raccordé à une ligne hydraulique, ledit corps principal (11) comprenant en outre un écrou à anneau de sécurité (20) associé de manière coulissante à l'extérieur dudit corps principal (11) et mobile entre une première position de fonctionnement qui permet le raccordement/désengagement du demi-raccord mâle (50) avec/du demi-raccord femelle (10), et une seconde position de fonctionnement dans laquelle les opérations de raccordement/désengagement sont empêchées, comprenant en outre un premier joint d'étanchéité (25) interposé entre ledit écrou à anneau (20) et ladite partie avant (11a) dudit corps interne (11) et un deuxième joint d'étanchéité (35) interposé entre ledit écrou à anneau (20) et ladite partie arrière (11b) dudit corps principal (11), **caractérisé en ce que** ladite partie avant (11a) dudit corps principal (11) s'étend frontalement vers le demi-raccord femelle (10) sur une longueur supérieure à la course maximale de l'écrou à anneau de sécurité (20), et **en ce que** ledit premier joint d'étanchéité (25) a une forme toroïdale et un profil transversal sur un plan radial comprenant un premier côté (26), qui est tourné vers l'intérieur du tore, sensiblement plat pour que ledit corps principal (11) repose sur ladite partie avant (11a), et un second côté (29), qui fait face à l'extérieur du tore, et ayant une première section (29a) et une seconde section (29b) qui font saillie vers le haut à partir d'une section de raccordement (29c) interposée entre elles, configuré pour être inséré dans un siège désigné de forme contraire (20a) obtenu sur ledit écrou à anneau (20) .

2. Raccord rapide (100) selon la revendication précédente, **caractérisé en ce que** ledit siège de forme contraire (20a) obtenu sur ledit écrou à anneau (20) et ledit premier joint (25) sont configurés de telle sorte que, une fois le joint assemblé, ladite première section (29a) dudit premier joint (25) est tournée vers la partie avant du demi-raccord femelle (10) et assure l'étanchéité à l'eau et à la poussière, et **en ce que** ladite seconde section (29b) est complètement insérée à l'intérieur dudit siège (20a) et assure la stabilité transversale dudit deuxième joint (35) en cas de mouvements de translation dudit écrou à anneau (20).

3. Raccord rapide (100) selon la revendication précédente, **caractérisé en ce que** le profil transversal dudit premier joint (25) comprend une section inclinée (29d) par rapport à la direction orthogonale à ladite section de raccordement (29c) qui définit une gorge qui assure la stabilité dudit deuxième joint (35) par rapport à l'extrusion de celui-ci depuis ledit siège dudit écrou à anneau (20) .

4. Raccord rapide (100) selon une ou plusieurs des revendications précédentes, **caractérisé en ce que** ledit deuxième joint d'étanchéité (35) a une forme toroïdale et un profil transversal sur un plan radial comprenant un premier côté (35a), qui est tourné vers l'intérieur du tore, sensiblement plat pour que ledit corps principal (11) repose sur ladite partie arrière (11b), et un second côté (35b), qui est tourné vers l'extérieur du tore, ayant deux épaulements de contact (35b') s'étendant depuis une section de raccordement centrale (35c) vers l'extérieur du tore pour un contact avec la surface interne (20b) dudit écrou à anneau (20).

5. Raccord rapide (100) selon la revendication précédente, **caractérisé en ce que** les deux sections latérales (36) du profil transversal dudit deuxième joint (35) comprennent chacune une boucle (37) qui sépare ledit épaulement de contact (35b') de la partie inférieure du profil transversal.

6. Raccord rapide (100) selon la revendication précédente, **caractérisé en ce que** lesdites boucles (37) se développent circonférentiellement le long de toute la surface latérale (36) dudit deuxième joint (35) .

7. Raccord rapide (100) selon une ou plusieurs des revendications précédentes, **caractérisé en ce que** ledit premier joint (25) est réalisé en polyuréthane thermoplastique TPU.

8. Raccord rapide (100) selon une ou plusieurs des revendications précédentes, **caractérisé en ce que** ledit deuxième joint (35) est réalisé en polyuréthane thermoplastique TPU.

9. Raccord rapide (100) selon une ou plusieurs des revendications précédentes, **caractérisé en ce qu'**il comprend en outre au moins un troisième joint (45) logé à l'intérieur d'un siège désigné obtenu dans ledit corps principal (11) et interposé entre ledit corps principal (11) et ledit corps adaptateur (60) et ayant également une fonction de joint racleur, ledit au moins un troisième joint (45) ayant une forme toroïdale avec un profil transversal sur un plan radial comprenant un corps principal (47) à partir duquel une tige (46) se ramifie, ledit profil ayant une première section (45a) qui est tournée vers l'intérieur du tore et raccordée à une section de raccordement incurvée (45b) qui raccorde ladite première section (45a) à une section latérale sensiblement verticale (45c) qui est à son tour raccordée à une seconde section sensiblement horizontale (45d) qui est tournée vers l'extérieur du tore et qui est raccordée à une section d'épaulement sensiblement verticale (45e) parallèle à ladite section latérale (45c) et qui est raccordée à une section d'extrémité (45f) qui délimite au sommet une tige délimitée par ladite première section (45a) et ladite section d'extrémité (45f), ladite tige (46) étant configurée pour entrer en contact avec ledit corps adaptateur (60).

10. Raccord rapide (100) selon la revendication précédente, **caractérisé en ce que** ledit troisième joint (45) est réalisé en polyuréthane thermoplastique TPU.

11. Raccord rapide (100) selon l'une quelconque des revendications 10 ou 11, **caractérisé en ce qu'**il comprend deux desdits troisièmes joints (45) logés dans ledit corps principal (11) de sorte que les tiges (46) sont orientées dans des directions opposées l'une par rapport à l'autre.
